# EUROPÄISCHE PATENTSCHRIFT

(11) **EP 1 991 796 B1**
(45) Veröffentlichungstag und Bekanntmachung des Hinweises auf die Patenterteilung: **09.04.2014**
(21) Anmeldenummer: 07703467.6
(22) Anmeldetag: 14.02.2007
(51) Int. Cl.: F16C 11/06, A61J 15/00, A61M 25/10, A61M 16/04

(54) **KUGELGELENK**
BALL AND SOCKET JOINT
Articulation à rotule

(30) Priorität: 22.02.2006 DE 102006008250
(43) Veröffentlichungstag der Anmeldung: 19.11.2008
(73) Patentinhaber: TRW Automotive GmbH, 73553 Alfdorf (DE)
(72) Erfinder: SCHAUMANN, Lothar, 40885 Ratingen (DE)
(74) Vertreter: Prinz & Partner
(86) Internationale Anmeldenummer: PCT/EP2007/001282
(87) Internationale Veröffentlichungsnummer: WO 2007/096081

(56) Entgegenhaltungen:
- EP-A- 0 675 296
- EP-A1- 0 442 602
- EP-A1- 0 638 735
- EP-A2- 0 231 479
- EP-B1- 0 784 755

## Beschreibung

Die Erfindung betrifft ein Kugelgelenk, insbesondere Axialgelenk, mit einem Gehäuse, einer Lagerschale, die in dem Gehäuse angeordnet ist, und einem Kugelzapfen mit einem Kugelkopf, der in der Lagerschale angeordnet ist, wobei die Lagerschale vom Kugelkopf elastisch aufgebogen ist, so daß die aus ihrer Verformung resultierende Rückstellkraft eine Vorspannung auf den Kugelkopf aufbringt, welche diesen aus dem Gehäuse hinauszudrücken versucht.

Allgemein stellt sich bei Kugelgelenken und insbesondere bei Axialkugelgelenken das Problem, daß bei zunehmendem Verschleiß der Lagerschale ein Spiel des Kugelkopfes im Gehäuse auftreten kann. Dieses Spiel ist grundsätzlich unerwünscht.

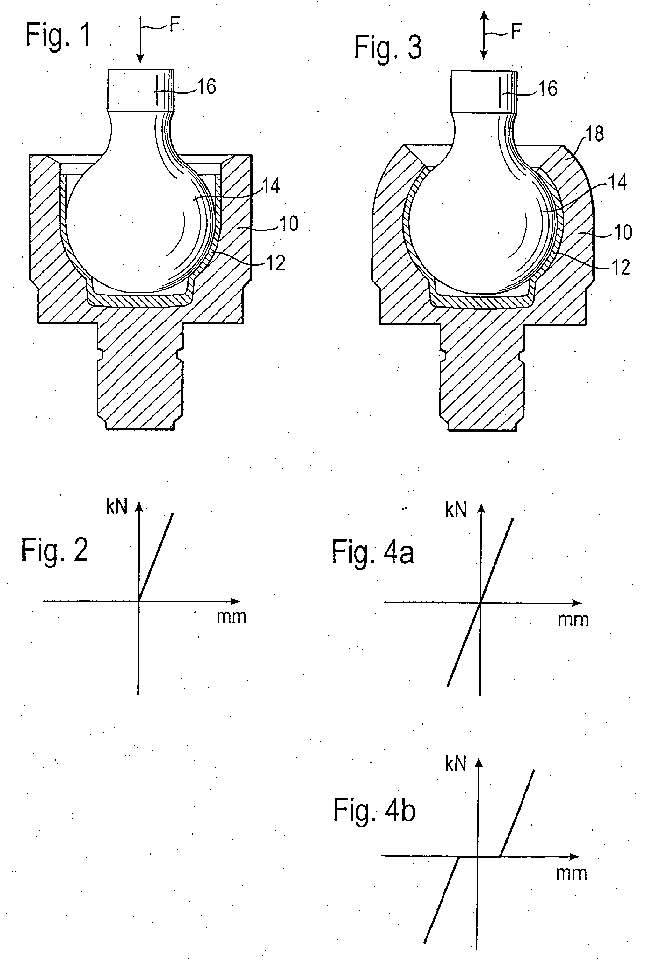

In den Figuren 1 und 3 ist ein Axialkugelgelenk nach dem Stand der Technik gezeigt. In Figur 1 ist das Axialkugelgelenk in einem montierten Zustand gezeigt, bevor das Gehäuse geschlossen ist, und in Figur 3 ist das Kugelgelenk in vollständig montiertem Zustand gezeigt. Es ist ein Gehäuse 10 zu erkennen, in welchem eine Lagerschale 12 angeordnet ist. In die Lagerschale ist ein Kugelkopf 14 eines Kugelzapfens 16 eingesetzt. Im vollständig montierten Zustand von Figur 3 ist der Randbereich 18 des Gehäuses nach innen umgebördelt, so daß der Kugelkopf 14 fest im Gehäuse 10 aufgenommen ist.

In Figur 2 ist die Kennlinie von Verschiebungen des Kugelkopfes 14 bei einer Belastung in der Richtung des Pfeils F aufgetragen. Es ist zu sehen, daß die Kurve von Kraft über Verschiebung des Kugelkopfes stark ansteigt, da der Kugelkopf nur verschoben werden kann, wenn die Lagerschale zusammengepreßt wird. Hierfür ist eine hohe Kraft erforderlich.

In Figur 4a ist die Kurve gezeigt, die sich bei einem geschlossenen, vollständig montierten Kugelgelenk unter Belastung in axialer Richtung ergibt. Da der Kugelkopf 14, wenn das Gehäuse 10 geschlossen ist, fest gegen die Lagerschale gedrückt wird, erfährt die Lagerschale im Kontaktbereich eine hohe elastische Verpressung. Entsprechend ergibt sich eine sehr steile Kurve von Kraft über Verschiebung. Dabei ist zu erkennen, daß die Kurve ohne Unstetigkeit durch den Nullpunkt verläuft, da das Kugelgelenk kein Spiel aufweist.

In Figur 4b ist der Verlauf von Kraft über Verschiebung des Kugelkopfes gezeigt, das sich bei einem Kugelgelenk mit starkem Verschleiß einstellt. Der Verschleiß hat dazu geführt, daß die Wandstärke der Lagerschale 12 im Kontaktbereich zum Kugelkopf durch Setzung und. Abrieb partiell verringert ist. Der Kugelkopf 14 kann daher um seine Mittellage im wesentlichen ohne Kraft nach unten und oben bewegt werden, während er nach Anlage an der Lagerschale 12 nur dann weiter verschoben werden kann, wenn das Material der Lagerschale elastisch zusammengepreßt wird. Daher ergibt sich eine Unstetigkeit der Kurve im Bereich des Nulldurchgangs, also bei einer Umkehr der Belastungsrichtung, während die Kurve außerhalb der Unstetigkeit in etwa dieselbe Steigung aufweist wie bei einem neuwertigen Kugelgelenk.

Es ist offensichtlich unverwünscht, wenn ein verschlissenes Kugelgelenk Spiel aufweist. Zum einen führt das Spiel zu Geräuschen, wenn der Kugelkopf bei einer Umkehr der Belastungsrichtung von einer Seite der Lagerschale auf die andere bewegt wird. Zum anderen führt das Spiel bei einer Umkehr der Belastungsrichtung zu erhöhten Belastungen des Kugelgelenks und der mit diesem gekoppelten Bauteile.

Aus der EP 0 784 755 A1 ist ein Kugelgelenk bekannt, welches das Auftreten von Spiel aufgrund von Verschleiß zu beseitigen sucht. Bei diesem Kugelgelenk ist zwischen dem Gehäuse und der Lagerschale ein Gummiring angeordnet, der bei der Montage des Kugelgelenks zusammengepreßt wird und dadurch die Lagerschale partiell elastisch gegen den Kugelkopf drückt. Auch wenn die Lagerschale verschleißt, liegt sie aufgrund der vom Gummiring ausgeübten Federkraft weiterhin am Kugelkopf an. Auf diese Weise wird verhindert, daß ein Spiel entsteht und der Kugelkopf kraftfrei im Inneren des Gehäuses verschoben werden kann. Nachteilig bei dem bekannten Kugelgelenk ist allerdings, daß in der Form des Gummirings ein zusätzliches Bauteil vorhanden ist, welches hergestellt, bereitgehalten und montiert werden muß. Dies führt zu erhöhten Kosten.

Die Aufgabe der Erfindung besteht darin, ein Kugelgelenk der eingangs genannten Art dahingehend weiterzubilden, das es kostengünstig hergestellt werden kann und dennoch verhindert ist, daß im Inneren des Gehäuses ein Spiel entsteht.

Zur Lösung dieser Aufgabe ist erfindungsgemäß bei einem Kugelgelenk der eingangs genannten Art vorgesehen, daß die Lagerschale vom Kugelkopf elastisch aufgebogen ist, so daß die aus ihrer Verformung resultierende Rückstellkraft eine Vorspannung auf den Kugelkopf aufbringt, welche diesen aus dem Gehäuse hinauszudrücken versucht, wobei zwischen dem Gehäuse und der Lagerschale, wenn diese im Gehäuse montiert ist und das Gehäuse geschlossen ist, im wesentlichen kein Freiraum im Tragbereich vorhanden ist.. Die Erfindung beruht auf dem Grundgedanken, zur Erzeugung der Vorspannung die Eigenelastizität der Lagerschale zu verwenden. Zu diesem Zweck wird diese mit einer Gestalt hergestellt, die nicht vollständig an die Gestalt des Kugelkopfes und an die Innenflächen des Gehäuses angepaßt ist, so daß bei der Montage die Lagerschale elastisch verformt wird, insbesondere aufgeweitet. Die sich daraus ergebenden Rückstellkräfte gewährleisten, daß die Lagerschale auch dann ohne Spiel am Kugelkopf anliegt, wenn die Wandstärke der Lagerschale durch Verschleiß verringert ist.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 einen Schnitt durch ein Kugelgelenk gemäß dem Stand der Technik im teilweise montierten Zustand;
- Figur 2 eine Kennlinie von Belastung über Verschiebung des Kugelkopfes für das Kugelgelenk von Figur 1;
- Figur 3 in einem Schnitt ein Kugelgelenk gemäß dem Stand der Technik im vollständig montierten Zustand;
- Figur 4 a bzw. Figur 4b jeweils eine Kennlinie von Belastung über Verschiebung des Kugelkopfes für das Kugelgelenk von Figur 3 im neuwertigen Zustand bzw. im verschlissenen Zustand;
- Figur 5 einen Schnitt durch ein erfindungsgemäßes Kugelgelenk im teilweise montierten Zustand;
- Figur 6 eine Kennlinie von Belastung über Verschiebung des Kugelkopfes für das Kugelgelenk von Figur 5;
- Figur 7in einem Schnitt ein erfindungsgemäßes Kugelgelenk im vollständig montierten Zustand;
- Figur 8a bzw. Figur 8b jeweils eine Kennlinie von Belastung über Verschiebung des Kugelkopfes für das Kugelgelenk von Figur 7 im neuwertigen Zustand bzw. im verschlissenen Zustand.

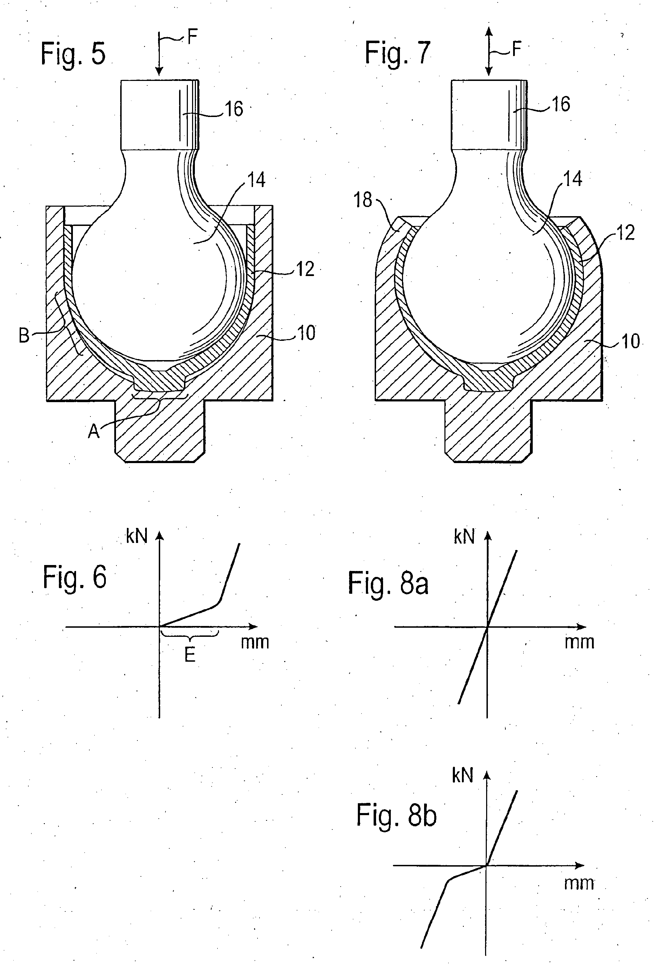

In Figur 5 ist ein Kugelgelenk zu sehen, das in gleicher Weise wie das aus Figur 1 bekannte Kugelgelenk ein Gehäuse 10 aufweist, in welchem eine Lagerschale 12 angeordnet ist, die wiederum einen Kugelkopf 14 eines Kugelzapfens 16 aufnimmt. Im, Unterschied zu dem Kugelgelenk von Figur 1 ist hier die Lagerschale 12 mit einem Innenraum ausgeführt, dessen Abmessungen allgemein ausgedrückt kleiner sind als die Abmessungen des Kugelkopfes 14. Insbesondere weist die Lagerschale in einem umlaufenden Bereich B, der etwas unterhalb des Äquators des Kugelkopfes 14 liegt, einen Krümmungsradius auf, der kleiner ist als der Radius des Kugelkopfes. Dies führt dazu, daß der Kugelkopf 14 nicht vollständig in die Lagerschale 12 und das Gehäuse 10 eingesetzt werden kann. Es ist zu sehen, daß sowohl zwischen dem Kugelkopf und der Lagerschale als auch zwischen der Lagerschale und dem Gehäuse ein umlaufender Freiraum verbleibt.

Wird der Kugelkopf 14 in diesem Zustand in der Richtung des Pfeils F belastet, ergibt sich die in Figur 6 dargestellte Kennlinie von Belastung über Verschiebung des Kugelkopfes. Es gibt zunächst einen vergleichsweise großen Bereich E, in welchem die Lagerschale 12 elastisch nachgibt und insbesondere aufgeweitet wird. Dieser Vorgang ist vergleichbar mit dem Aufweiten einer Tellerfeder und unterscheidet sich wesentlich von der Kennlinie aus Figur 2. Beim erfindungsgemäßen Kugelgelenk wird die Lagerschale 12 nach Art einer Feder vorgespannt, wenn der Kugelkopf zum Boden der Lagerschale gedrückt wird. Dieser Vorgang ist abgeschlossen, wenn sowohl der Freiraum zwischen dem Kugelkopf 14 und der Lagerschale 12 als auch zwischen der Lagerschale 12 und dem Gehäuse 10 im Tragbereich B vollständig beseitigt ist. Ab diesem Punkt steigt die Kennlinie von Kraft über Verschiebung des Kugelkopfes stark an, da ab diesem Punkt das Material der Lagerschale 12 zusammengedrückt werden muß.

In Figur 7 ist das Kugelgelenk in vollständig montiertem Zustand gezeigt. Der umgebördelte Randbereich 18 des Gehäuses 10 hält den Kugelkopf in einem fest nach unten in das Gehäuse 10 hineingedrückten Zustand, in welchem die Lagerschale 12 elastisch vorgespannt ist und keinerlei Freiraum im Tragbereich B einerseits zwischen dem Kugelkopf 14 und der Lagerschale 12 und andererseits zwischen der Lagerschale 12 und dem Gehäuse 10 vorhanden ist.

In den Figuren 8a und 8b sind die sich ergebenden Kennlinien des Kugelgelenks von Figur 7 gezeigt. Im nicht verschlissenen Zustand (Figur 8a) ergibt sich eine gerade Kennlinie mit einem Nulldurchgang, da in jeder Belastungsrichtung unmittelbar das Material der Lagerschale 12 zusammengedrückt werden muß (siehe die durchgezogene Kennlinie). Im verschlissenen Zustand (Figur 8b) ist zu sehen, daß im Bereich des Nulldurchgangs, also bei einer Umkehr der Belastungsrichtung, kein Spiel des Kugelgelenks ergibt, sondern in jedem Fall der Kugelkopf gegen eine definierte Kraft bewegt werden muß. Dies ist darauf zurückzuführen, daß die elastische Rückstellkraft der Lagerschale 12 dafür sorgt, daß der Kugelkopf in Richtung des umgebördelten Randes 18 des Gehäuses gedrückt wird, so daß kein Spiel auftreten kann.

## Patentansprüche

1. Kugelgelenk, insbesondere Axialgelenk, mit einem Gehäuse (10), einer Lagerschale (12), die in dem Gehäuse (10) angeordnet ist, und einem Kugelzapfen (16) mit einem Kugelkopf (14), der in der Lagerschale (12) angeordnet ist, wobei die Lagerschale (12) vom Kugelkopf (14) elastisch aufgebogen ist, so daß die aus ihrer Verformung resultierende Rückstellkraft eine Vorspannung auf den Kugelkopf (14) aufbringt, welche diesen aus dem Gehäuse (10) hinauszudrücken versucht, **dadurch gekennzeichnet, dass** zwischen dem Gehäuse (10) und der Lagerschale (12), wenn diese im Gehäuse (10) montiert ist und das Gehäuse (10) geschlossen ist, im wesentlichen kein Freiraum im Tragbereich vorhanden ist.

2. Kugelgelenk nach Anspruch 1, **dadurch gekennzeichnet, daß** die Lagerschale (12) im nicht montierten Ausgangszustand in einem Bereich, der oberhalb ihres Bodens liegt, einen Krümmungsradius hat, der kleiner ist als der Radius des Kugelkopfes (14).

3. Kugelgelenk nach einem der vorhergehenden Ansprüche, **dadurch gekennzeichnet, daß** die Lagerschale (12) im nicht montierten Ausgangszustand in einem Bereich (B) innen und außen unterschiedliche Krümmungsradien aufweist.

4. Kugelgelenk nach einem der vorhergehenden Ansrüche, **dadurch gekennzeichnet, daß** die Lagerschale (12) über eine Fläche (A) im Gehäuse (10) abgestützt ist.

5. Kugelgelenk nach einem der vorhergehenden Ansprüche, **dadurch gekennzeichnet, daß** der Krümmungsradius des Gehäuses (10) in einem Bereich (B) außermittig verläuft.

6. Kugelgelenk nach einem der vorhergehenden Ansprüche, **dadurch gekennzeichnet, daß** die Innenfläche des Gehäuses (10) in einem Bereich (B) durch mehrere, auch außermittig verlaufende Krümmungsradien gebildet ist.

## Claims

1. A ball joint, particularly an axial joint, having a housing (10), a bearing shell (12) which is arranged in the housing (10), and a ball pin (16) with a ball head (14) which is arranged in the bearing shell (12), the bearing shell (12) being bent open elastically by the ball head (14) so that the restoring force resulting from its deformation applies a prestress onto the ball head (14) which attempts to press the latter out of the housing (10), **characterized in that** substantially no free space is present in the support region between the housing (10) and the bearing shell (12) when the latter is installed in the housing (10) and the housing (10) is closed.

2. The ball joint according to claim 1, **characterized in that** in the non-installed initial state, in a region which lies above its bottom, the bearing shell (12) has a radius of curvature which is smaller than the radius of the ball head (14).

3. The ball joint according to either of the preceding claims, **characterized in that** in a region (B), the bearing shell (12) has different radii of curvature inside and outside in the non-installed initial state.

4. The ball joint according to any of the preceding claims, **characterized in that** the bearing shell (12) is supported in the housing (10) by an area (A).

5. The ball joint according to any of the preceding claims, **characterized in that** the radius of curvature of the housing (10) runs eccentrically in a region (B).

6. The ball joint according to any of the preceding claims, **characterized in that** in a region (B), the inner surface of the housing (10) is formed by several radii of curvature also running eccentrically.

## Revendications

1. Joint sphérique, en particulier joint axial, présentant un boîtier (10), une coquille de coussinet (12) agencée dans le boîtier (10), et un pivot sphérique (16) comprenant une tête sphérique (14) agencée dans la coquille de coussinet (12), la coquille de coussinet (12) étant pliée élastiquement par la tête sphérique (14) de manière à s'ouvrir de sorte que l'effort de rappel résultant de sa déformation exerce une précontrainte sur la tête sphérique (14) qui tente de pousser cette dernière hors du boîtier (10), **caractérisé en ce qu'**il n'y a sensiblement pas d'espace libre dans la zone de support entre le boîtier (10) et la coquille de coussinet (12) lorsque celle-ci est montée dans le boîtier (10) et le boîtier (10) est fermé.

2. Joint sphérique selon la revendication 1, **caractérisé en ce qu'**à l'état initial non monté, la coquille de coussinet (12) présente dans une zone située au-dessus de son fond un rayon de courbure inférieur au rayon de la tête sphérique (14).

3. Joint sphérique selon l'une des revendications précédentes, **caractérisé en ce qu'**à l'état initial non monté, la coquille de coussinet (12) présente dans une zone (B) différents rayons de courbure à l'intérieur et à l'extérieur.

4. Joint sphérique selon l'une des revendications précédentes, **caractérisé en ce que** la coquille de coussinet (12) est soutenue dans le boîtier (10) par une surface (A).

5. Joint sphérique selon l'une des revendications précédentes, **caractérisé en ce que** le rayon de courbure du boîtier (10) s'étend dans une zone (B) de façon excentrée.

6. Joint sphérique selon l'une des revendications précédentes, **caractérisé en ce que** la face intérieure du boîtier (10) est formée dans une zone (B) par plusieurs rayons de courbure s'étendant également de façon excentrée.
